# EUROPEAN PATENT SPECIFICATION

(11) **EP 0 537 987 B1**
(45) Date of publication and mention of the grant of the patent: **20.03.1996**
(21) Application number: 92309331.4
(22) Date of filing: 14.10.1992
(51) Int. Cl.: F16D 69/02

(54) **Prestressed brake drum or rotor**
Bremstrommel oder -rotor mit vorgespannter Oberfläche
Tambour ou rotor de frein avec surface préattelée

(30) Priority: 16.10.1991 US 778411
(43) Date of publication of application: 21.04.1993
(73) Proprietor: DAYTON-WALTHER CORPORATION, Dayton, Ohio 45439 (US)
(72) Inventor: Hester, Larry B., Dayton, Ohio 45449 (US)
(74) Representative: Blanco White, Henry Nicholas

(56) References cited:
- EP-A- 0 079 732
- EP-A- 0 254 827
- EP-A- 0 386 652
- DE-C- 3 841 331
- US-A- 4 760 900

## Description

### BACKGROUND OF THE INVENTION

This invention relates in general to brake drums or rotors and in particular to a brake drum or rotor having improved fatigue resistance and friction pad burnishing characteristics.

Frictional forces are used to slow and stop wheeled vehicles that are in motion. Typically, non-rotating brake pads which are affixed to brake shoes or brake callipers are pressed against a surface which is attached to the wheel and rotating therewith. The rotating surface is formed on the inside of a brake drum or upon a brake rotor. As the brake pad slides over the surface, the wheel is slowed and the vehicle's kinetic energy is converted to heat. The heat is dissipated through the drum or rotor material. Finally, the brake pad clamps the surface, holding the attached wheel stationary.

Brake drums and rotors are often cast from iron, which has excellent heat conducting properties. The castings are machined to provide a true circular surface to be engaged by the brake pads. By trueing the surface, vibration is minimised. Holes are also drilled in the casting which receive wheel mounting studs. In a typical application, vehicle wheels are bolted to the studs mounted in the brake drum. The brake drums are mounted upon an axle hub and rotate with the axle. Brake shoes having arcuate brake pads are mounted upon a backing plate. The backing plate is rigidly bolted to the vehicle housing axle and is thus held stationary. Disc brake rotors also have studs for attaching vehicle wheels and are mounted upon an axle hub the same as brake drums. However, the brake pads are held in position over machined rotor surfaces by callipers which are rigidly mounted upon the vehicle. Pressurised hydraulic or pneumatic actuators are used to urge the brake pads against the machined surface of the drum or rotor to brake the vehicle.

Repeated brake applications cause cycles of heating and cooling of the brake drum which expand and contract the drum metal. The expansion and contraction of the metal causes increases in residual tensile stresses which were previously induced by the machining operations carried out upon the brake drum. As the tensile stresses increase, cracks may form in the drum surface. This formation of crakcs in the brake drum surface is commonly referred to as heat checking.

While the brake pads are formed to the approximate curvature of the inside machined surface of the brake drum, the mating surfaces between new brake pads and nde brake drums generally do not match one another. However, the pads are burnished during initial usage on the vehicle to match exactly the brake drum surface. During this initial burnishing, high spots on the brake pad can cause localised areas of high temperature on the inside machined surface of the brake drum. These high surface temperatures can change the crystalline structure of the drum metal as the cast iron is changed to martensite. This is known as hot spotting and cause surface cracking.

Disc brake rotors are subject to the same heating and cooling effects of repeated braking cycles.

US-A 4 760 900, on which the preamble of claim 1 is based, proposes making a brake drum of a composite material. The friction surface layer of grey cast iron metallurgically bonded to a layer of high-strength material through which cracks will not propagate. Then, when the surface layer cracks, the cracks can propagate only as far as the boundary between layers and the integrity of the brake drum is maintained.

The invention provides an annular rotatable vehicle brake component selected from the group consisting of a vehicle brake drum and a vehicle brake rotor, the brake component having a machined annular surface for frictional engagement with the brake pad, the machined surface having residual stresses formed therein as a result of the machining operation which provides the brake component with an initial fatigue life characterised in that: the machined surface is shot peened to prestress the machined surface by inducing compressive stresses to reduce the residual surface tensile stresses produced by the machining operation and to increase the fatigue life of the brake component.

The invention also provides a method for forming an improved vehicle brake component adapted to engage a brake pad characterised by comprising the steps of: (a) providing an annular rotatable brake component selected from the group consisting of a vehicle brake drum and a vehicle brake rotor, the brake component having a machined annular surface for frictional engagement with the brake pad, the machined surface having residual stresses formed therein as a result of the machining operation which provides the brake component with an initial fatigue life; and (b) shot peening the machined surface to prestress the machined surface by inducing compressive stresses to reduce the residual surface tensile stresses produced by the machining operation and to increase the fatigue life of the brake component.

The brake component may be roughened to quickly burnish the associated brake pad.

The compressive stresses induced combine with and reduce residual surface tensile stresses caused by machining operations used to fabricate the brake components. If enough compressive stress is induced, the residual surface tensile stresses are totally cancelled. The result is that heat checking is reduced and the fatigue resistance of the drum or rotor is increased.

Furthermore, when shot peening is used, the process roughens the machined surface as impacts of the peening balls dent the surface. The roughened surface abrades the high points on the brake pads and thereby reduces burnishing time for the contacting pad surfaces. By decreasing the time needed to burnish the pads, surface cracking due to hot spolting is minimised, which also extends brake drum or rotor life.

In addition, by randomly roughening the surface, the spiral cutting tool marks are removed, thus eliminating "corkscrewing" of the linings (i.e. the tendency for the shoes to be urged in either an outboard or inboard direction when the brakes are applied). This significantly reduces or eliminates "shoe slap" which would otherwise occur as a result of Lhe spiral tool marks which arise during machining.

Other advantages of the present invention will become apparent to those skilled in the art from the following detailed description of the preferred embodiment, when read in light of the accompanying drawings.

### BRIEF DESCRIPTION OF THE DRAWINGS

Fig. 1 is a block diagram illustrating the steps for forming a brake drum according to the present invention.

Fig. 2 is a sectional perspective view of a brake drum of the present invention,produced according to the process of Fig. 1.

Fig. 3 is an enlarged sectional view which generally illustrates the surface texture which a shot peening process imparts to the drum.

Fig. 4 is a sectional perspective view of a disc brake rotor according to the present invention.

### DETAILED DESCRIPTION OF THE PREFERRED EMBODIMENT

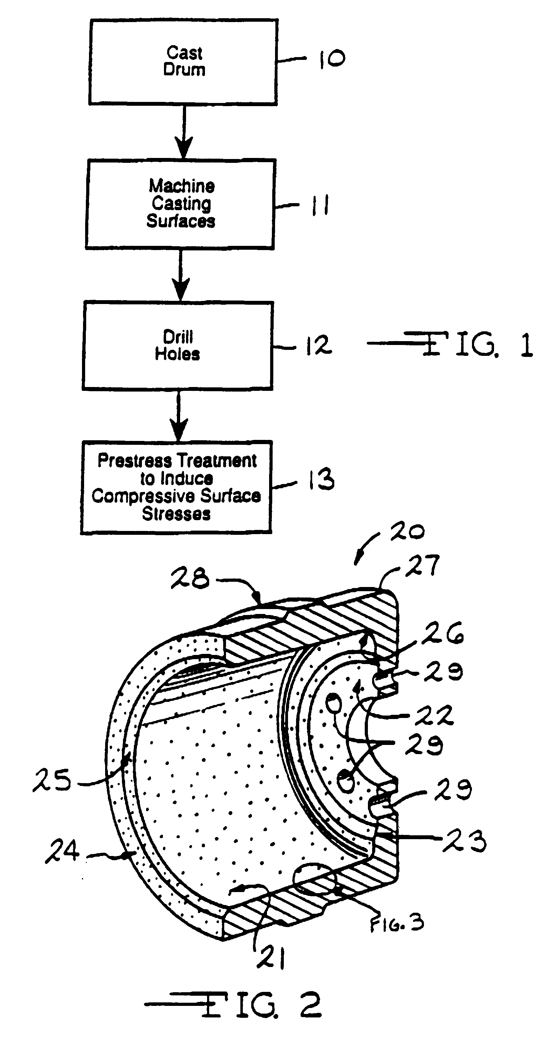

Referring now to the drawings, there are illustrated in Fig. 1 the steps used to form a brake drum according to this invention. The drum is cast in the first step 10 using conventional casting techniques, such as sand casting. Frequently gray iron, which has excellent heat transfer characteristics, is used as the casting metal, however, other metals may also be used. The casting is then machined in the next step 11.

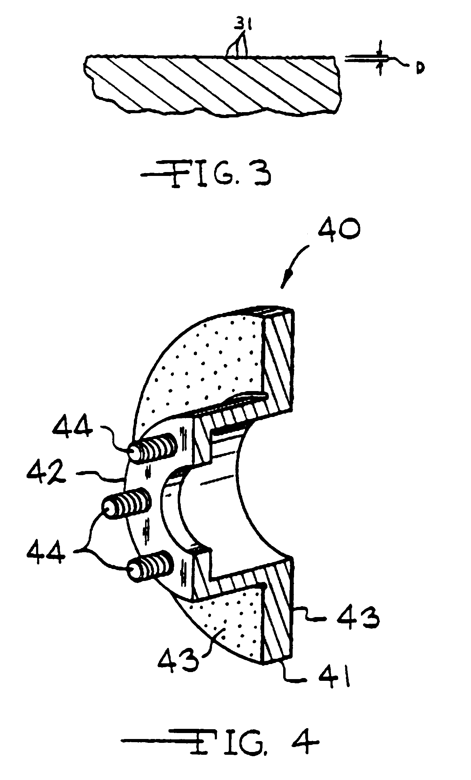

The typical machined surfaces are illustrated in the sectional/perspective view of a brake drum 20 shown in Fig. 2. A cylindrical surface 21 is machined on the inside of the drum 20 to minimise vibration when the brake pads (not shown) are pressed against the surface 21. The inside surface of a radially inwardly extending annular flange 22 that forms the axially inner end of the drum 20 is also machined to assure clearance between the brake drum and the other brake components. An inner lip 23 is often formed as machining removes metal from the inside surface of the flange 22. An outer lip 24 is machined to assure clearance from the backing plate (not shown). A chamfer 25 is machined between the outer lip 24 and the inner surface 21 to provide a transition and eliminate a sharp edge. A wrap around 26 between the inner surface 21 and the flange 22 is not generally machined. The drum may have an outer circumferential ring 28 to add stiffness. The ring 28 is commonly referred to as a squealer band. Following machining, a plurality of holes 29 are drilled through the flange 22 as the next step 12 of fabrication. These holes can be threaded to receive wheel mounting studs (not shown).

To this point, the fabrication of the brake drum 20 has followed conventional steps. The machining operations induce tensile stresses in the drum surfaces as the machine tooling tears away a portion of the surface. The residual tensile stresses cause heat checking when small cracks develop and grow in the surface as the drum is heated and cooled during normal braking cycles. The cracks can ultimately lead to metal fatigue and potential brake drum failure.

The present invention involves prestressing the machined surfaces of a brake drum (or disc brake rotor) to induce compressive stresses therein. The invention is shown as an additional step 13 in Fig. 1. The effect of the prestressing is an extension of the fatigue life of the brake drums so treated. The heating and cooling of the prestressed drums during brake applications continue to expand and contract the metal, eventually causing tensile stresses to reappear, but only after the compressive stress are relieved. Thus, while cracks may eventually develop in the surfaces, the emergence is significantly delayed over prior art brake drums.

Several processes are available to prestress brake drums. A number of processes involve applying direct pressure to the machined surface. These processes include shot peening, roll burnishing, knurling and compression over a mandrel. Processes that do not involve direct application of pressure include heat treating and magnaforming. With heat treating, nonuniform cooling of a heated casting retains compressive stresses in the casting; with magnaforming, large magnets induce compressive stresses within the component. The particular process selected would be determined with an individual case by case evaluation of the economics involved. All of the processes can produce a uniform distribution of compressive stress across the surface. This is in contrast to the non-uniform distribution of surface stresses in a non-prestressed part.

In many applications, shot peening has been found to be a relatively low cost process for inducing the desired surface compression stresses in a previously machined metal part. Shot peening involves directing a high velocity stream of shot against a surface being treated. Upon contact with the surface, the shot produces slight, rounded depressions in the surface, shown in Fig. 3 at 31, and which are shown as dotted areas in Figs. 2 and 4. The shot stretches the surface radially and causes plastic flow of the metal at the instant of impact. The effect usually extends from 0.1 to 0.8 millimetres deep (represented in Fig. 3 as dimension D), depending upon the hardness of the part, shot size and peening intensity. The metal beneath this layer is not plastically deformed. In the stress distribution that results from shot peening, the surface metal has induced compressive stress parallel to the surface. The metal below the surface layer does have reaction-induced tensile stress. However, the surface compressive stresses may be several times greater than the subsurface tensile stresses, which provides the improved fatigue life for the part.

The rounded depressions caused by the shot peening imparts a slight roughening to the machined surface. As a result, the mating brake pads are more quickly burnished to the shape of the inner surface 21 or the drum 20. Reduction of the brake pad burnishing time has been found to reduce the amount of hot spotting caused by high spots on the brake pads rubbing against the machined surface 21 and the related formation of drum surface cracks.

Thus, shot peening is a particularly effective process for prestressing a brake drum. Generally, prior to shot peening, the machined surface will have a surface "roughness" which is usually less than 5 microns. It has been found that shot peening to obtain a surface roughness or texture greater than 5 microns, and preferably in the range of 5 to 12 microns, produces the desired surface roughness and depth of compressive stress. More particularly, a surface roughness in the range of 6 to 8 microns is preferable.

Generally, the prestressing is applied to all machined surfaces of the brake drum. Thus the inner surface 21, the outer lip 24, the chamfer 25 and the inside surface of the flange 22 are shot peened. In the process, the wrap around 26 would also be treated, even though it is not machined. This is an expediency since it would be more expensive to mask this area than to shot peen it. Similarly, in a heat treating process, all surfaces, including non-machined ones would be treated due to the nature of the process.

The fatigue life of disc brake rotors is also increased by prestressing the machined surfaces. A typical disc brake rotor 40 is shown in Fig. 4. The rotor consists of an annular flange 41 having a cylindrical centre portion 42. Parallel surfaces 43 are machined upon the flange portion 41 for engagement by brake pads (not shown) mounted upon callipers (not shown) upon the rotor. Tensile stresses are induced in the machined surfaces 43 by one of the processes listed above. As in brake drums, prestressing of the machined surfaces 43 will relieve the surface tensile stresses and induce residual surface compressive stresses. The compressive stresses act to extend the lifetime of the brake rotor. If shot peening is used as the treatment process, the roughened machined surfaces enhance burnishing of the brake pads as described above.

While shot peening both induces surface compressive stress and roughens the surface, in some situations, prestressing of the brake drum or rotor may not be desired. For example, if only minor tensile stress have been induced in the surface, the additional step of prestressing the surface may be deemed inappropriate. In these situations, however, a roughened surface would still be needed for burnishing the brake pads. When only a roughened surfaced is needed, processes other than shot peening may be used to obtain it. For example, knurling can be used to provide the slight roughening desired.

The present invention also has application to brake components produced by methods other than casting. For example, the invention can be used with advantage on forged brake components.

In accordance with the provisions of the patent statutes, the principle and mode of operation of the present invention have been explained and illustrated in its preferred embodiment.

## Claims

1. An annular rotatable vehicle brake component (20:40) selected from the group consisting of a vehicle brake drum and a vehicle brake rotor, the brake component having a machined annular surface (21:43) for frictional engagement with the brake pad, the machined surface having residual stresses formed therein as a result of the machining operation which provides the brake component with an initial fatigue life characterised in that: the machined surface is shot peened to prestress the machined surface by inducing compressive stresses to reduce the residual surface tensile stresses produced by the machining operation and to increase the fatigue life of the brake component.

2. A brake component as defined in Claim 1 characterised in that the machined surface (21:43) is shot peened to provide said machined surface with a roughness sufficient to effectively burnish the brake pad upon initial brake applications.

3. A brake component as defined in Claim 2 characterised in that the machined surface is roughened the a roughness in the range of 5 to 12 microns.

4. A brake component as defined in any one of the Claims 1 to 3 characterised in that said brake component is a brake drum (20).

5. A brake component as defined in Claims 4 characterised in that said brake drum (20) includes an outer lip (24) having a chamfered edge (25), and in that said lip (24) is shot peened to prestress said lip (24) by inducing compressive stresses therein.

6. A brake component as defined in Claim 4 or Claim 5 characterised in that said brake drum (20) includes a radially inwardly extending annular flange (22) at the axially inner end thereof and in that the surface of said flange adjacent the brake pad is shot peened to prestress said surface by inducing compressive stresses therein.

7. A brake component as defined in any one of the Claims 1 to 3 characterised in that said brake component is a brake rotor (40).

8. A method for forming an improved vehicle brake componcnt (20;40) adapted to engage a brake pad characterised by comprising the steps of:
(a) providing an annular rotatable brake component selected from the group consisting of a vehicle brake drum and a vehicle brake rotor, the brake component having a machined annular surface (21:43) for frictional engagement with the brake pad, the machined surface having residual stresses formed therein as a result of the machining operation which provides the brake component with an initial fatigue life; and
(b) shot peening the machined surface to prestress the machined surface by inducing compressive stresses to reduce the residual surface tensile stresses produced by the machining operation and to increase the fatigue life of the brake component.

9. A method as defined in claitn 8 characterised by the further step of shot peening the machined surface to provide the machined surface with a predetermined roughness which effectively burnishes the brake pad upon initial brake applications.

10. A method as defined in claim 9 characterised in that the machined surface is roughened in the range of 5 to 12 microns.

## Patentansprüche

1. Ringförmiges, drehbares Bauteil (20, 40) einer Fahrzeugbremse, das aus einer Gruppe ausgewählt worden ist, die aus einer Fahrzeug-Bremstrommel und einem Fahrzeug-Bremsrotor besteht, wobei das Brems-Bauteil eine bearbeitete, ringförmige Fläche (21, 43) zum Reibeingriff mit einem Bremsbelag hat, und wobei die bearbeitete Fläche aufgrund des Bearbeitungsvorganges Restspannungen aufweist, durch die das Bremsteil eine anfängliche Dauerfestigkeit aufweist,
dadurch **gekennzeichnet**, daß
- die bearbeitete Fläche einem Kugelstrahlvorgang unterworfen worden ist, um diese bearbeitete Fläche durch Aufbringen von Druckspannungen vorzuspannen und um auf diese Weise die oberflächlichen, restlichen Zugspannungen zu vermindern, die durch den Bearbeitungsvorgang erzeugt worden sind, und um auf diese Weise die Dauerfestigkeit des Bremsen-Bauteiles zu erhöhen.

2. Bremsen-Bauteil nach Anspruch 1,
dadurch **gekennzeichnet,** daß die bearbeitete Fläche (21, 43) einem Kugelstrahlvorgang unterworfen worden ist, um sie mit einer Rauhigkeit zu versehen, die dazu ausreicht, den Bremsbelag bei den ersten Bremsvorgängen wirkungsvoll glatt zu polieren.

3. Bremsen-Bauteil nach Anspruch 2,
dadurch **gekennzeichnet,** daß die bearbeitete Fläche auf einer Rauhigkeit im Bereich zwischen 5 und 12 Micron aufgerauht worden ist.

4. Bremsen-Bauteil nach einem der Ansprüche 1 bis 3,
dadurch **gekennzeichnet,** daß das Bremsenbauteil eine Bremstrommel (20) ist.

5. Bremsen-Bauteil nach Anspruch 4,
dadurch **gekennzeichnet**, daß die Bremstrommel (20) eine Außenlippe (24) aufweist, die eine abgeschrägte Kante (25) aufweist, und daß die Lippe (24) einem Kugelstrahlvorgang unterworfen worden ist, um sie durch das Einleiten von Druckspannungen vorzuspannen.

6. Bremsen-Bauteil nach einem der Ansprüche 4 oder 5,
dadurch **gekennzeichnet**, daß die Bremstrommel (20) an ihrem radial inneren Ende einen sich radial nach innen erstreckenden, ringförmigen Flansch (22) hat, und daß die Fläche dieses Flansches, der in der Nähe des Bremsbelages liegt, einem Kugelstrahlvorgang unterworfen worden ist, um diese Fläche durch Einleiten von Druckspannungen vorzuspannen.

7. Bremsen-Bauteil nach einem der Ansprüche 1 bis 3,
dadurch **gekennzeichnet**, daß das Bremsen-Bauteil ein Brems-Rotor (40) ist.

8. Verfahren zum Herstellen eines verbesserten Fahrzeugbremsen-Bauteils (20, 40), das so ausgelegt ist, daß es mit einem Bremsbelag in Berührung treten kann,
**gekennzeichnet** durch die folgenden Verfahrensschritte:
a) Vorsehen eines ringförmigen, drehbaren Bremsen-Bauteils, das aus einer Gruppe ausgewählt ist, die aus einer Fahrzeug-Bremstrommel und einem Fahrzeug-Bremsrotor besteht, wobei das Bremsen-Bauteil eine bearbeitete, ringförmige Fläche (21, 43) zum Reibeingriff mit einem Bremsbelag hat, und wobei die bearbeitete Fläche Restspannungen aufweist, die von dem Bearbeitungsvorgang herrühren und die das Bremsenbauteil mit einer anfänglichen Dauerfestigkeit versehen; und
b) Kugelstrahlen der bearbeiteten Fläche, um diese bearbeitete Fläche durch Einbringen von Druckspannungen vorzuspannen, um die oberflächlichen Rest-Zugspannungen zu vermindern, die durch den Bearbeitungsvorgang erzeugt worden sind, und um die Dauerfestigkeit des Bremsen-Bauteiles zu erhöhen.

9. Bremsen-Bauteil nach Anspruch 8,
**gekennzeichnet** durch den weiteren Verfahrensschritt des Kugelstrahlens der bearbeiteten Fläche, um diese mit einer vorbestimmten Rauhigkeit zu versehen, mit deren Hilfe der Bremsbelag bei den ersten Bremsbetätigungen wirkungsvoll glattpoliert werden kann.

10. Bremsen-Bauteil nach Anspruch 9,
dadurch **gekennzeichnet,** daß die bearbeitete Fläche auf einen Rauhigkeitsbereich zwischen 5 und 12 Mikron aufgerauht worden ist.

## Revendications

1. Composant annulaire rotatif (20; 40) de frein de véhicule sélectionné parmi le groupe consistant en un tambour de frein de véhicule et en un rotor de frein de véhicule, ce composant de frein comportant une surface annulaire usinée (21; 43) destinée à venir en contact de frottement avec la plaquette de frein, la surface usinée présentant des contraintes résiduelles qui s'y forment par suite de l'opération d'usinage qui donne au composant de frein une durée de vie initiale à la fatigue, caractérisé en ce que la surface usinée est soumise à un grenaillage pour précontraindre la surface usinée par induction des contraintes de compression afin de réduire les contraintes de traction résiduelles en surface produites par l'opération d'usinage et d'augmenter la durée de vie à la fatigue du composant de frein.

2. Composant de frein selon la revendication 1, caractérisé en ce que la surface usinée (21; 43) est soumise à un grenaillage pour donner à ladite surface usinée une rugosité suffisante pour roder efficacement la plaquette de frein lors du serrage initial du frein.

3. Composant selon la revendication 2, caractérisé en ce que la surface usinée rendue rugueuse présente une rugosité comprise entre 5 et 12 micromètres.

4. Composant de frein selon l'une quelconque des revendications 1 à 3, caractérisé en ce que ce composant est un tambour de frein (20).

5. Composant de frein selon la revendication 4, caractérisé en ce que ledit tambour de frein (20) comprend une lèvre extérieure (24) comportant un bord chanfreiné (25) et en ce que ladite lèvre (24) est soumise à un grenaillage pour précontraindre ladite lèvre (24) par induction de contraintes de compression dans celle-ci.

6. Composant de frein selon la revendication 4 ou la revendication 5, caractérisé en ce que ledit tambour de frein (20) comprend un rebord annulaire (22) s'étendant radialement vers l'intérieur à son extrémité axialement intérieur et en ce que la surface dudit rebord adjacente à la plaquette de frein est soumise à un grenaillage pour précontraindre ladite surface par induction de contraintes de compression dans cette dernière.

7. Composant de frein selon l'une quelconque des revendications 1 à 3, caractérisé en ce que ledit composant de frein est un rotor (40) de frein.

8. Procédé pour former un composant (20; 40) de frein amélioré adapté pour venir en contact avec une plaquette de frein, caractérisé par le fait qu'il comprend les étapes consistant:
(a) à préparer un composant annulaire rotatif de frein sélectionné parmi le groupe consistant en un tambour de frein de véhicule et un rotor de frein de véhicule, ce composant de frein comportant une surface annulaire usinée (21; 43) destinée à venir en contact de frottement avec la plaquette de frein, la surface usinée présentant des contraintes résiduelles qui y sont formées par suite de l'opération d'usinage qui donne au composant de frein une durée de vie initiale à la fatigue; et
(b) à soumettre à un grenaillage la surface usinée pour précontaindre la surface usinée par induction de contraintes de compression pour réduire les contraintes résiduelle de traction en surface produites par l'opération d'usinage et pour augmenter la durée de vie à la fatigue du composant de frein.

9. Procédé selon la revendication 8, caractérisé par l'étape supplémentaire de grenaillage de la surface usinée pour donner à la surface usinée une rugosité qui rode efficacement la plaquette de frein lors de l'application initiale de frein.

10. Procédé selon la revendication 9, caractérisé en ce que la surface usinée a une rugosité comprise entre 5 et 12 micromètres.
